# EUROPÄISCHE PATENTANMELDUNG

(11) **EP 0 732 169 A1**
(43) Veröffentlichungstag der Anmeldung: **18.09.1996**
(21) Anmeldenummer: 96102777.8
(22) Anmeldetag: 24.02.1996
(51) Int. Cl.: B23K 26/16, B23K 26/14

(54) **Vorrichtung zum Schutz der Bearbeitungsoptik eines Laser-Bearbeitungsgerätes vor Verschmutzung**

(30) Priorität: 16.03.1995 DE 29504457 U
(71) Anmelder: HAAS-LASER GmbH, D-78713 Schramberg (DE)
(72) Erfinder: Brucher, Egon, D-77716 Fischerbach (DE)
(74) Vertreter: Patentanwälte Westphal, Buchner, Mussgnug Neunert, Göhring

(57) **Zusammenfassung**

Zum Schutz der Bearbeitungsoptik eines Laser-Bearbeitungsgerätes vor Verschmutzung umschließt ein Düsentrichter (20) den Laserstrahlkegel (14) koaxial. Durch den Düsentrichter (20) wird ein Gasstrom mit einem Drall in bezug auf die Achse des Laserstrahlkegels (14) geführt.

## Beschreibung

Die Erfindung betrifft eine Vorrichtung zum Schutz der Bearbeitungsoptik eines Laser-Bearbeitungsgerätes vor Verschmutzung gemäß dem Oberbegriff des Anspruchs 1.

Beim Bearbeiten von Werkstücken mit Laser-Licht entstehen an der Schmelzstelle des Werkstückes Dämpfe und Spritzer. Die Dämpfe und Spritzer können die Bearbeitungsoptik des Laser-Gerätes, welche das Laser-Licht auf die Schweißstelle fokussiert, verschmutzen. Um die Bearbeitungsoptik vor einer solchen Verschmutzung zu schützen ist es bekannt, vor der Bearbeitungsoptik ein Schutzglas anzuordnen. Das Schutzglas wird ausgetauscht, wenn seine Verschmutzung die Bearbeitung beeinträchtigt. Bei höheren Laser-Lichtleistungen, die mit verstärkter Bildung von Dämpfen und Spritzern einhergehen, wird die Standzeit der Schutzgläser geringer. Außerdem wächst die Gefahr, daß die Schutzgläser Zerspringen. Der erhöhte Verbrauch von Schutzgläsern stellt einen nicht zu vernachlässigenden Kostenfaktor dar. Außerdem bedeutet das Austauschen des Schutzglases eine Unterbrechung des Arbeitsablaufes.

Um die Schutzgläser länger sauberzuhalten, ist es bekannt, die Dämpfe und Spritzerpartikel mit einem Gasstrom seitlich wegzublasen. Der quer zur Achse des Laser-Strahls zugeführte Gasstrom wird möglichst dicht über die Bearbeitungsstelle, d. h. den Fokus des Laserstrahlkegels geführt. Die seitlich weggeblasenen Dämpfe werden in der Regel abgesaugt. Der quer durch den Laserstrahlkegel gerichtete Gasstrom bläst Dämpfe und Partikel zuverlässig weg, die stromabseitig von dem Laserstrahlkegel aus der Schmelze austreten. Dämpfe und Partikel, die aus der Schmelze stromaufseitig von dem Laserstrahlkegel austreten, können durch den Gasstrom umgelenkt und gegen das Schutzglas geblasen werden. Der quergerichtete Gasstrom kann das Verschmutzen des Schutzglases daher nur verringern, jedoch nicht verhindern.

Bei größeren Laser-Lichtleistungen und entsprechend hohem Anteil von Spritzern und Partikeln muß der Quergasstrom entsprechend stark sein, wodurch eine vollständige Absaugung nicht mehr gewährleistet ist. Da bei einigen handelsüblichen Werkstoffen die entstehenden Stäube und Dämpfe toxisch sind, ist eine vollständige Abführung der Dämpfe und Partikel wichtig.

Die seitlich von der Bearbeitungsstelle angeordnete Querstromdüse und die dieser Querstromdüse diametral gegenüber angeordnete Absaugeinrichtung verbauen den freien Arbeitsraum in Richtung der Querströmung.

Der Erfindung liegt die Aufgabe zugrunde, eine Vorrichtung zum Schutz der Bearbeitungsoptik vor Verschmutzung zu schaffen, die eine Verschmutzung möglichst quantitativ verhindert und möglichst wenig zusätzlichen Platz verbraucht. Vorzugsweise soll auch eine möglichst vollständige Absaugung der entstehenden Stäube und Dämpfe erreicht werden.

Diese Aufgabe wird erfindungsgemäß gelöst durch eine Vorrichtung mit den Merkmalen des Anspruchs 1 bzw. des Anspruchs 6.

Vorteilhafte Ausführungen der Erfindung sind in den Unteransprüchen angegeben.

Der Erfindung liegt der Gedanke zugrunde, den Gasstrom zum Wegblasen der Dämpfe und Partikel so zu führen, daß diese Verunreinigungen nur aus dem Laserstrahlkegel herausgeführt werden, jedoch keine Verunreinigungen von außen in den Laserstrahlkegel hineingeblasen werden. Hierzu wird der Gasstrom im wesentlichen koaxial zu der Achse des Laserstrahlkegels mittels eines Düsentrichters so zugeführt, daß er aus dem Laserstrahlkegel nur radial nach außen umgelenkt werden kann. Der Geschwindigkeitsvektor des Gasstromes weist somit stets nur in Richtung des Laserstrahlkegels oder radial aus diesem heraus. Dämpfe und Verunreinigungen können daher nicht in den Laserstrahlkegel eindringen und das Schutzglas verschmutzen, sondern werden stets auf dem Laserstrahlkegel herausgeführt. Die Vorrichtung kommt gegenüber herkömmlichen Lösungen mit einem erheblich geringeren Gasverbrauch aus. Der Gasstrom wird so geführt, daß er an der Bearbeitungsstelle möglichst keine Strömungsgeschwindigkeit aufweist, die das Schmelzen des Materials im Fokus des Laserstrahlkegels und das geschmolzene Material beeinträchtigen würde. Der Gasstrom beeinflußt dadurch den Bearbeitungsprozeß möglichst wenig und nimmt keine Dämpfe oder Spritzer aus der Schmelze mit. Eventuell notwendiges Schutzgas kann ohne Beeinträchtigung zugeführt werden.

Eine konstruktiv einfache Lösung besteht darin, den Gasstrom in dem Düsentrichter mit einem Drall bezüglich der Achse des Laserstrahlkegels zu führen. Die Drallkomponente bewirkt eine radiale Komponente des Geschwindigkeitsvektors des Gasstromes beim Austritt aus dem Düsentrichter. Diese radiale Geschwindigkeitskomponente bewirkt ein verbessertes radiales Wegführen von Partikeln und Dämpfen aus dem Laserstrahlkegel.

Zur Erzeugung des Dralles kann der Gasstrom mit einer tangential gerichteten Geschwindigkeitskomponente in den Düsentrichter eingeleitet werden. Zusätzlich oder alternativ kann der Düsentrichter so geformt sein, daß er dem Gasstrom den Drall erteilt. Hierzu können an der Innenwand des Düsentrichters Führungen ausgeformt sein z. B. in Gestalt von schraubenlinienförmigen Nuten oder Rinnen.

Der Düsentrichter kann dünnwandig ausgeführt sein und den Laserstrahlkegel mit geringem radialen Abstand umschließen, so daß dieser Düsentrichter und die Zuführung des Gasstromes wenig Platz beansprucht und den freien Arbeitsraum wenig beeinträchtig. Zudem kann der Düsentrichter konstruktiv auch als Aufnahme für das Schutzglas verwendet werden.

Weiter kann erfindungsgemäß die radiale Strömung des aus dem Düsentrichter austretenden Gasstromes durch eine Absaugung erzeugt oder zusätzlich unterstützt werden, die koaxial zu dem Laserstrahlkegel und radial außerhalb des zugeführten Gasstromes angeordnet ist.

Um den optimalen Effekt zu erzielen, ist die Absaugung vorzugsweise so ausgebildet, daß die Absaugströmung des Gases so gerichtet ist, als ob sie von dem in der Bearbeitungsstelle liegenden Fokus des Laserstrahlkegels ausginge. Dadurch wird eine optimale Absaugung der in der Schmelze der Bearbeitungsstelle entstehenden Partikel und Dämpfe gewährleistet.

Der zugeführte Gasvolumenstrom und der Absaugvolumenstrom werden so aufeinander abgestimmt, daß im Bereich der Werkstoffschmelze an der Bearbeitungsstelle die Geschwindigkeit des Gasstromes möglichst klein wird und gegen Null geht. Der Absaugvolumenstrom ist größer als oder zumindest ebenso groß wie der zugeführte Gasvolumenstrom.

Für eine konstruktiv besonders einfache und die gestellten Forderungen bestmöglich erfüllende Absaugung wird vorzugsweise ein Absaugtrichter verwendet, der den Düsentrichter koaxial umschließt. Der so geformte Absaugtrichter ist ebenfalls platzsparend und beeinträchtigt den Arbeitsraum kaum.

Der Absaugtricher weist vorzugsweise an seinem hinteren weiten Ende einen Absaugstutzen auf, über welchen das abgesaugte Gas abgeführt wird. Die Anordnung des Absaugstutzens mit der zugehörigen Anschlußleitung ist damit möglichst weit aus dem Arbeitsraum wegverlagert und stört wenig.

Der Absaugtrichter kann mit seinem hinteren weiten Ende zweckmäßigerweise auch die Bearbeitungsoptik zumindest teilweise umschließen, so daß der abgesaugte Gasstrom gleichzeitig in vorteilhafter Weise zur Kühlung der Bearbeitungsoptik ausgenützt werden kann.

Das vordere enge Eintrittsende des Absaugtrichters ist hinter dem vorderen engen Ende des Düsentrichters angeordnet. Dadurch wird sichergestellt, daß sich Partikel, die sich bereits außerhalb des Laserstrahlkegels befinden, nur abgesaugt werden können und durch den Absaugtrichter nicht in den Laserstrahlkegel hineingezogen werden können.

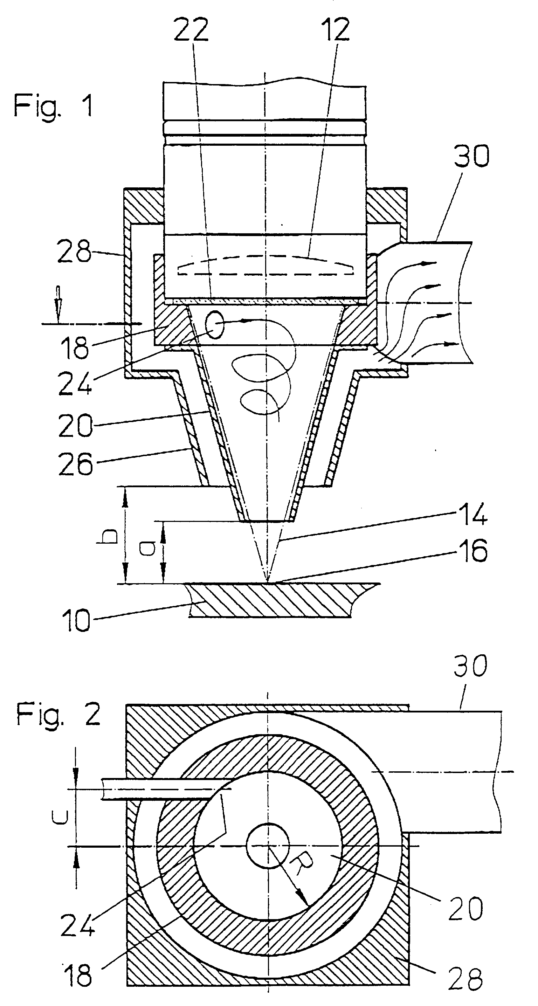

Im folgenden wird die Erfindung anhand eines in der Zeichnung dargestellten Ausführungsbeispiels näher erläutert. Es zeigen
- Figur 1: einen schematischen Axialschnitt der Vorrichtung und
- Figur 2: einen Querschnitt längs der Schnittlinie in Figur 1.

Zum Schweißen, Gravieren oder sonstigen Bearbeiten eines Werkstückes 10 dient ein Laser-Bearbeitungsgerät, von welchem nur die Bearbeitungsoptik 12 schematisch angedeutet ist. Die Bearbeitungsoptik 12 bündelt den Laserstrahl zu einem in der Zeichnung strichpunktiert eingezeichneten Laserstrahlkegel 14, dessen Fokus 16 auf die Bearbeitungsstelle des Werkstückes 10 positioniert wird.

Auf das vordere Ende der Bearbeitungsoptik 12 ist mittels eines Trägerringes 18 ein Düsentrichter 20 aufgesetzt, der zu dem Laserstrahlkegel 14 koaxial ist, den Laserstrahlkegel 14 umschließt und sich mit dem gleichen Kegelwinkel wie der Laserstrahlkegel 14 gegen sein vorderes dem Werkstück 10 zugewandtes Austrittsende hin verengt. Der Trägerring 18 kann gleichzeitig dazu dienen, ein Schutzglas 22 aufzunehmen und zu haltern, welches die Bearbeitungsoptik 12 austrittseitig abdeckt.

Über einen Einlaß 24 des Trägerringes 18 wird ein Gasstrom, z. B. Luft oder ein geeignetes Gas, mit tangentialer Richtungskomponente in den Düsentrichter 20 zugeführt, wie in der Zeichnung durch einen Pfeil angedeutet ist. Der Gasstrom wird in dem Düsentrichter 20 nach unten geführt und tritt durch das enge untere Ende des Düsentrichters 20 aus, wobei er durch das außermittige Einleiten einen Drall aufweist. Der koaxial zusammen mit dem Laserstrahlkegel 14 aus dem Düsentrichter 20 austretende Gasstrom erhält aufgrund dieses Dralles beim Austritt aus dem Düsentrichter 20 eine radiale Geschwindigkeitskomponente, so daß das Gas in dem Bereich zwischen dem Austrittsende des Düsentrichters 20 und dem Fokus 16 radial nach außen aus dem Laserstrahlkegel 14 herausgeführt wird. Der Drall des Gasstromes in dem Düsentrichter 20 und das radiale Austreten des Gasstromes aus dem Laserstrahlkegel 14 verhindern, daß Dämpfe und Spritzerpartikel, die in dem im Fokus 16 geschmolzenen Werkstück 10 entstehen, in den Laserstrahlkegel 14 eindringen und an das Schutzglas 22 gelangen, bzw. bewirken, daß eingedrungene Dämpfe und Spritzer auf dem Weg zum Schutzglas abgebremst und gegen die Innenwand des Düsentrichters 20 abgedrängt werden, so daß sie mit dem Gasstrom ausgeblasen werden.

In die Wandung des Düsentrichters 20 kann eine schraubenlinienförmige Nut oder Rinne eingeprägt sein, die dem Gasstrom den Drall erteilt oder den durch das tangentiale Einleiten erzeugten Drall verstärkt.

Um zu verhindern, daß infolge des Dralles des Gasstromes in der Achse des Laserstrahlkegels eine strömungsreduzierte oder strömungsfreie Zone entsteht, durch welche Dämpfe oder Spritzer auf das Schutzglas 22 gelangen, kann der Einlaß 24 so ausgebildet sein, daß er sich erweiternd in den Düsentrichter 20 einmündet und den Gasstrom divergierend einleitet. Der Einlaß 24 kann auch eine Dralleinrichtung aufweisen, so daß der Gasstrom um seine Achse rotierend eingeleitet wird.

Der Düsentrichter 20 wird von einem koaxial angeordneten Absaugtrichter 26 umschlossen. Das weite hintere Ende des Absaugtrichters 26 geht in ein Gehäuse 28 über, welches die Bearbeitungsoptik 12 mit einer ringförmigen Kammer umschließt. Ein in das Gehäuse 28 eingesetzter Absaugstutzen 30 mündet in diese ringförmige Kammer und dient zum Anschließen an eine Absaugung. Über den Absaugstutzen 30 und den zwischen dem Düsentrichter 20 und dem Absaugtrichter 26 gebildeten Mantel wird das über den Düsentrichter 20 zugeführte Gas abgesaugt, wie in der Zeichnung durch Pfeile dargestellt ist. Der Gasstrom in der ringförmigen Kammer dient dabei gleichzeitig auch der Kühlung der Bearbeitungsoptik 12.

Der Abstand a des engen Austrittsendes des Düsentrichters 20 von dem Fokus 16 ist kleiner als der Abstand b des engen Eintrittsendes des Absaugtrichters 26 von dem Fokus 16. Dadurch ist gewährleistet, daß das mit Staub und Dämpfen beladene Gas, das sich außerhalb des Laserstrahlkegels 14 befindet, nur in den Absaugtrichter 26 gesaugt wird und durch den Absaugtrichter 26 nicht in den Laserstrahlkegel 14 gezogen werden kann.

Außerdem werden der über den Düsentrichter 20 zugeführte Gasvolumenstrom sowie der Gaszufuhrdruck und der über den Absaugtrichter 26 abgesaugte Absaugvolumenstrom sowie der Druck im Absaugtrichter 26 so aufeinander abgestimmt, daß im Bereich des Fokus 16 die Strömungsgeschwindigkeit des Gases minimal und möglichst gleich Null ist. Der Absaugvolumenstrom ist zumindest gleich dem zugeführten Gasvolumenstrom und vorzugsweise großer als dieser, so daß gewährleistet ist, daß die Gasströmung stets aus dem Laserstrahlkegel 14 nach außen verläuft.

## Patentansprüche

1. Vorrichtung zum Schutz der Bearbeitungsoptik eines Laser-Bearbeitungsgerätes vor Verschmutzung, mit einem den Laserstrahlkegel koaxial umschließenden Düsentrichter, durch welchen ein Gasstrom zugeführt wird, dadurch gekennzeichnet, daß der Gasstrom in dem Düsentrichter (20) mit einem Drall in bezug auf die Achse des Laserstrahlkegels (14) geführt wird.

2. Vorrichtung nach Anspruch 1, dadurch gekennzeichnet, daß der Gasstrom mit einer tangential gerichteten Geschwindigkeitskomponente in den Düsentrichter (20) eingeleitet wird.

3. Vorrichtung nach Anspruch 1 oder 2, dadurch gekennzeichnet, daß an der Innenwand des Düsentrichters (20) drallerzeugende Führungen für den Gasstrom ausgeformt sind.

4. Vorrichtung nach einem der Ansprüche 1 bis 3, dadurch gekennzeichnet, daß der Gasstrom über einen sich erweiternden Einlaß (24) in den Düsentrichter (20) eingeleitet wird

5. Vorrichtung nach einem der Ansprüch 1 bis 4, dadurch gekennzeichnet, daß der Gasstrom über einen mit einer Dralleinrichtung versehenen Einlaß (24) in dem Düsentrichter (20) eingeleitet wird.

6. Vorrichtung zum Schutz der Bearbeitungsoptik eines Laser-Bearbeitungsgerätes vor Verschmutzung, mit einem den Laserstrahlkegel koaxial umschließenden Düsentrichter, durch welchen ein Gasstrom zugeführt wird, insbesondere nach einem der Ansprüche 1 bis 5, dadurch gekennzeichnet, daß eine ringförmige Absaugung (26) koaxial zu dem Laserstrahlkegel (14) und radial außerhalb des zugeführten Gasstromes angeordnet ist.

7. Vorrichtung nach Anspruch 6, dadurch gekennzeichnet, daß die Absaugung (26) so angeordnet ist, daß die Richtung der Gasströmung in der Absaugung (26) von dem Fokus (16) auszugehen scheint.

8. Vorrichtung nach Anspruch 7, dadurch gekennzeichnet, daß die Absaugung als den Düsentrichter (20) koaxial umschließender Absaugtrichter (26) ausgebildet ist.

9. Vorrichtung nach Anspruch 8, dadurch gekennzeichnet, daß der Absaugtrichter (26) an seinem hinteren weiten Ende an einen Absaugstutzen (30) angeschlossen ist.

10. Vorrichtung nach Anspruch 9, dadurch gekennzeichnet, daß der Absaugtrichter (26) mit seinem weiten hinteren Ende die Bearbeitungsoptik (12) zumindest teilweise umschließt und daß der Absaugstutzen (30) zumindest teilweise im Bereich der Bearbeitungsoptik (12) oder hinter dieser angeordnet ist.

11. Vorrichtung nach einem der Ansprüche 8 bis 10, dadurch gekennzeichnet, daß der Abstand (b) der Eintrittsöffnung des Absaugtrichters (26) von dem Fokus (16) größer ist als der Abstand (a) der Austrittsöffnung des Düsentrichters (20) von dem Fokus (16).

12. Vorrichtung nach Anspruch 11, dadurch gekennzeichnet, daß der Absaugvolumenstrom gleich oder größer als der zugeführte Gasvolumenstrom ist.

13. Vorrichtung nach Anspruch 12, dadurch gekennzeichnet, daß der Absaugvolumenstrom und der zugeführte Gasvolumenstrom so aufeinander abgestimmt sind, daß im Bereich des Fokus (16) die Gasströmungsgeschwindigkeit minimal, vorzugsweise Null ist.
